# EUROPEAN PATENT APPLICATION

(11) **EP 4 459 130 A1**
(43) Date of publication of application: **06.11.2024**
(21) Application number: 24169647.5
(22) Date of filing: 11.04.2024
(51) Int. Cl.: F04D 17/12, F04D 29/051, F04D 29/057, F04D 29/053, B23B 5/48, B23B 29/12, F16C 17/02, F16C 17/04, F16C 3/02, F16C 32/06

(54) **METHOD FOR MACHINING RIBS OR GROOVES ON A SHAFT FOR AIR OR GAS BEARINGS OF A COMPRESSOR**

(30) Priority: 04.05.2023 EP 23171475
(71) Applicant: Belenos Clean Power Holding AG, 2502 Bienne (CH)
(72) Inventor: GASHI, Rexhep, 1762 Givisiez (CH)
(74) Representative: ICB SA

(57) **Abstract**

The invention relates to a method for machining ribs or grooves on a shaft (7) with an air or gas axial bearing (24) forming part of the shaft. The shaft can be rotated about a longitudinal axis (A-A) of a centrifugal compressor. According to the method, all of the ribs or grooves (32, 24a) are obtained at once on a workpiece portion of the shaft and of the axial bearing of the shaft, by moving the shaft or at least one tool holder fitted with a machining tool in a longitudinal direction of machining, by the machining tool performing reciprocating motions with a machining position in contact and with a position not in contact with the shaft or the axial bearing of the shaft from the beginning to the end of the workpiece portion or face. The reciprocating motions of the machining tool are synchronised with the sinusoidal programming carried out in the machining unit, as well as with the desired and programmed arrangement of the ribs or grooves to be produced.

## Description

### Field of the invention

The invention relates to a method for machining ribs or grooves on a shaft for air or gas bearings of a high-speed centrifugal fluid compressor. The compressor is a two-stage compressor, and comprises a casing with a fluid inlet and a compressed fluid outlet and encloses a shaft rotatably mounted about a longitudinal axis. A first compressor wheel and a second compressor wheel are mounted back-to-back on the shaft, the first compressor wheel constituting a first compression stage and the second compressor wheel constituting a second compression stage. The centrifugal compressor further comprises a motor, preferably a synchronous electric motor, positioned between the first compressor wheel and the second compressor wheel and arranged to rotate the shaft. At least one air or gas axial bearing forms a part of the shaft and is disposed at one end of the shaft. Moreover, a front air or gas radial bearing can be mounted on a first end of the shaft and a rear air or gas radial bearing can be mounted on a second end of the shaft.

### Background of the invention

Fluid compressors are typically referred to as turbocompressors or centrifugal compressors. They comprise a stator and a rotor forming a permanent magnet synchronous motor (brushless motor). They can reach very high speeds, such as 100,000 to 500,000 rpm. The motor drives the compressor wheels at high speed, at which the compressor wheels compress the fluid. The fluid can be air, a gas, a refrigerant or any other suitable fluid. By using two compressor wheels, the fluid is compressed twice as much.

These compressors can be used, for example, in a mobile HVAC (heating, ventilation and air conditioning) system with a refrigerant gas, such as in electric, hybrid or hydrogen-powered vehicles. These compressors can also be used in a stationary system with a refrigerant gas, such as a heat pump.

These compressors typically comprise a first circuit for circulating the fluid to be compressed and a second circuit for circulating a cooling liquid used to cool the compressor, and more particularly the motor and the air or gas bearings supporting the motor shaft on the one hand, and the electronic components on the other. More specifically, rotating the motor at high speed causes it to heat up considerably, so much so that the compressor components need to be cooled to prevent damage thereto. These circuits are typically provided inside the compressor itself, at least as far as the cooling circuit is concerned. There is no provision to facilitate the flow of the cooling gas or air during the operation of the compressor, in particular at high speeds, which constitutes a drawback. Moreover, the air or gas bearings supporting the rotor shaft are not designed to support the rotor shaft without friction, which leads to significant heat generation when the rotor is rotating at a high speed, which constitutes another drawback.

Moreover, grooves or ribs are known to be made on the air or gas bearings for air or gas flow, and to create pressure and cooling. However, the grooves are produced without any specific arrangement by laser machining, which constitutes a drawback because the machining time is too long and thus the costs thereof are too high.

### Summary of the invention

One purpose of the invention is to overcome the various drawbacks mentioned hereinabove by means of a method for rapidly producing grooves or ribs on a rotor shaft for air or gas bearings, including an air or gas axial bearing which forms part of the shaft. Said grooves or ribs on the shaft are arranged in such a way as to overcome gravity when the shaft of the compressor rotates at high speed in each bearing and to allow the rotating rotor shaft to be held without mechanical contact on an air or gas current in the radial bearings and thus virtually frictionlessly.

To this end, the present invention relates to a method for machining ribs or grooves on a shaft intended to be rotated about a longitudinal axis of a centrifugal compressor, and/or on an air or gas axial bearing forming part of the shaft, which method comprises the features of independent claim 1.

Specific steps of the method are defined in dependent claims 2 to 10.

One advantage of the method for machining ribs or grooves on the shaft and/or the axial bearing of the workpiece shaft of the compressor in a machining unit is that all the ribs or grooves are obtained at once on a workpiece portion of the shaft driven in rotation, by a machining tool which moves back and forth from the beginning to the end of the workpiece portion of the shaft. To do this, the reciprocating motions of the machining tool are synchronised with the sinusoidal program set up in the machining unit, as well as with the desired arrangement of the ribs or grooves to be produced on the portion of the shaft.

One advantage of the method for machining ribs or grooves on the axial bearing of the workpiece shaft of the compressor in a machining unit is that all the ribs or grooves are obtained on one or two faces of the disc of the axial bearing of the shaft driven rotatably.

During the machining of the shaft and/or of the axial bearing of the shaft, the shaft or the tool holder carrying the machining tool is also displaced in a longitudinal machining direction while the machining tool carries out the reciprocating motions.

The reciprocating motions of the tool are compared to a piezoelectric oscillator where the oscillation frequency can be varied to speed up or slow down the reciprocating motions of the tool according to how the machining unit was programmed to obtain said desired ribs or grooves. During the reciprocating motions, the tool is in the machining position and in contact with the shaft or the axial bearing of the shaft at one time and not in contact with the shaft or the axial bearing of the shaft at another time.

The workpiece shaft is attached to a rotor structure of an electric motor driving it in rotation, and at least one air or gas axial bearing forming part of the shaft and disposed at a first end of the shaft between a compressor wheel and an air or gas radial bearing. Ribs or grooves can be produced on one face or preferably on two faces of the disc of the air or gas axial bearing by a specific tool for machining ribs or grooves in the axial bearing. However, the same machining tool can be used to machine the ribs or grooves on portions of the shaft for the radial bearings and on one or two faces of the disc of the air or gas axial bearing.

One advantage of the method for machining ribs or grooves in a machining unit is that the ribs or grooves are produced very quickly in less than 1 minute on each workpiece portion of the shaft for the air or gas radial bearings and with great precision. The same applies to the grooves or ribs produced on one or two faces of the disc of the air or gas axial bearing driven rotatably. The machining tool is harder than the material of the shaft or of the air or gas axial bearing.

The sinusoidal function therefore makes it possible to achieve synchronisation between the rotation of the shaft and the movement in a longitudinal direction of the machining tool or the shaft. The frequency and amplitude of the sinusoidal function are chosen as a function of the geometry of the grooves, the number of grooves, the speed of rotation of the shaft and the speed of the longitudinal displacement.

As explained above, the machining unit can be programmed for simultaneous synchronised rotation with the machining tool according to a sinusoidal program or function to obtain a rib or groove arrangement on each workpiece portion of the shaft for each air or gas radial bearing, and for the air or gas axial bearing.

As a result of such a machining of the ribs or grooves, which are preferably V-shaped with a change of orientation of each rib or groove in the centre of each machined portion on the shaft, the shaft rotating at high speed can be held in the compressor in the air or gas radial bearings without mechanical contact. The shaft is thus held in each radial bearing with virtually no friction by the pressure of the air or gas passing within the grooves or ribs as a result of the high-speed rotation of the shaft. From as low as 6,000 rpm, the air or gas pressure in each aerodynamic radial bearing is such that the shaft is no longer in mechanical contact with the static radial bearing, thus avoiding any mechanical friction. It goes without saying that the faster the shaft rotates, the greater the air pressure in the radial bearing, which automatically generates more air or gas friction.

The grooves or ribs are machined by the machining unit and the machining tool according to a sinusoidal program and the desired arrangement of the grooves or ribs, so as to reverse the orientation of the grooves or ribs on the shaft that is substantially towards the inner half of each static radial bearing placed above said ribs. This generates an air or gas pressure, which can become greater and greater the faster the shaft rotates.

Such a high-speed centrifugal fluid compressor can rotate at very high speeds without excessive heating due to the production of the ribs or grooves on the air or gas radial bearings.

A axial bearing is also provided between the first compressor wheel and the first radial bearing. Grooves or ribs are made at the periphery in the form of spirals on a front face and a rear face of the disc of the axial bearing. Films of air are generated by the grooves as the shaft rotates to hold the axis in a longitudinally well-centred position.

### Brief description of the drawings

The purposes, advantages and features of the present invention will be better understood upon reading the following detailed description of one embodiment of the invention, which is given as a non-limiting example and illustrated in the accompanying drawings, in which:

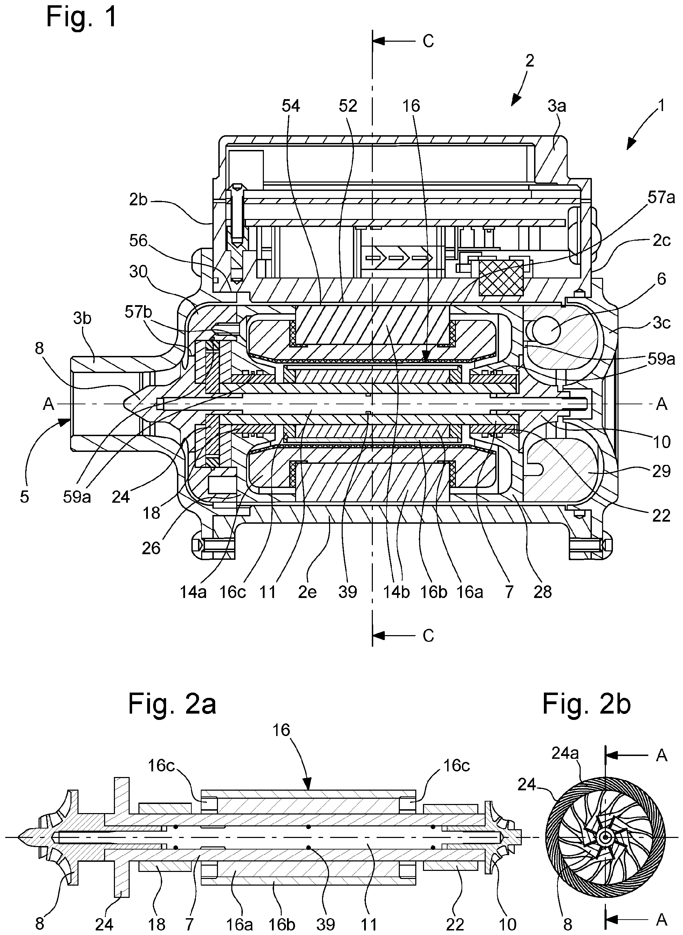

- Fig. 1 shows a longitudinal sectional view, along the axis A-A, of a high-speed centrifugal compressor according to the invention,
- Fig. 2a and 2b show a longitudinal sectional view, along the axis A-A, of the shaft with the compressor wheels, the aerodynamic axial and radial bearings and the permanent magnet rotor structure, and a plan view from the side of the first compressor wheel and the axial bearing forming part of the shaft according to the invention,

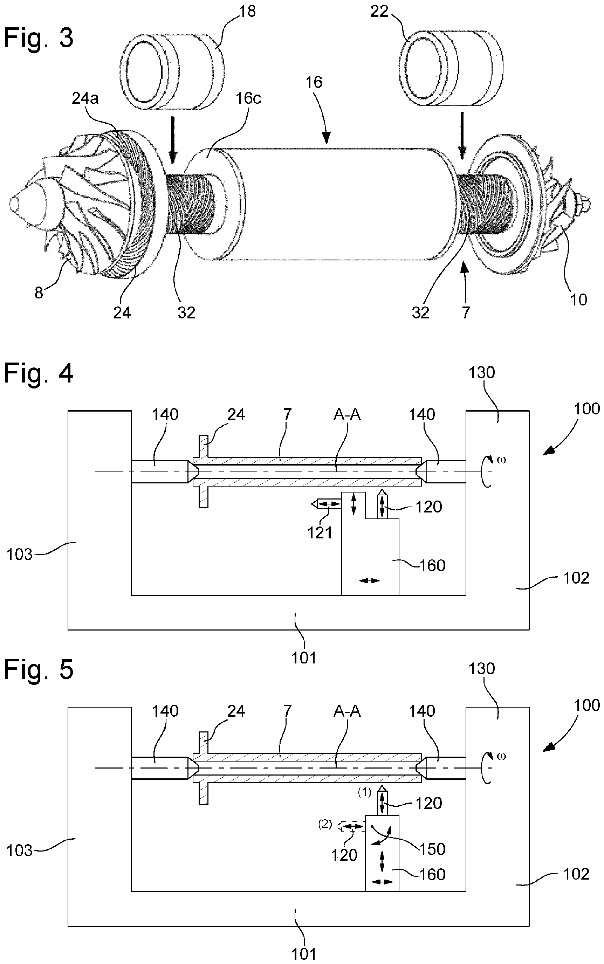

- Fig. 3 is a three-dimensional view of the assembly in Fig. 2a and 2b showing the grooves or ribs in each static radial bearing shown raised above the shaft according to the invention and on the axial bearing forming part of the shaft,
- Fig. 4 is a longitudinal sectional view of a machining unit for machining grooves or ribs with a first machining assembly on an air or gas axial bearing forming part of the compressor shaft and for machining grooves or ribs with a second machining assembly on two portions of the shaft for the radial bearings according to the invention, and
- Fig. 5 is a longitudinal sectional view of an alternative embodiment of a machining unit for machining grooves or ribs with a single machining assembly on an air or gas axial bearing forming part of the compressor shaft and for machining grooves or ribs on two portions of the shaft for the radial bearings according to the invention.

### Detailed description of the invention

In the present description, all the components forming part of the centrifugal compressor, which are well known in the prior art, are only briefly described herein, as the invention essentially relates to the manner in which ribs or grooves are produced on two portions of a shaft in order to be covered by two static air or gas radial bearings respectively, or on an air or gas axial bearing forming part of the shaft.

Fig. 1 shows a cross-section, along the longitudinal axis A-A, of a high-speed centrifugal compressor 1. The centrifugal compressor comprises, in a casing 2, a shaft 7 made of tungsten carbide or ceramic, mounted such that it rotates about a longitudinal axis A-A passing through the front face 2b and rear face 2c, a first centrifugal compressor wheel 8 and a second centrifugal compressor wheel 10 mounted back-to-back at each end of the shaft 7, said first compressor wheel 8 constituting a first compression stage and said second compressor wheel 10 constituting a second compression stage. In particular, the shaft 7 is hollow in this embodiment and encloses a threaded rod 11, to each end whereof one of the compressor wheels 8, 10 is screwed, enabling the compressor wheels to be easily mounted and removed. Thus, the two compressor wheels 8 and 10 are driven on the same shaft 7, which improves the energy efficiency and avoids the need for a gearbox. The rear of the compressor wheels 8 and 10 includes a labyrinth seal to control the pressures in the compressor and balance the axial forces.

The casing 2 further encloses an electric motor that is preferably synchronous, positioned between the first compressor wheel 8 and the second compressor wheel 10 and arranged to rotate the shaft 7. The motor comprises a stator 14 and a rotor structure 16 which interact with one another to form a synchronous electric motor with at least one permanent magnet 16a (brushless motor). More particularly, the stator 14 is formed by a coil 14a and two ferrite elements 14b, mounted such that they are fixed relative to the casing 2. The rotor structure 16 comprises one or more permanent magnets 16a made integral with the shaft 7, for example by bonding, and is covered by a titanium lining 16b. Titanium flanges 16c are attached (for example by bonding) to the lateral ends of the lining and ensure that the rotor is resistant to the centrifugal forces at high speeds.

The shaft 7 is rotatably mounted in the casing 2 about the longitudinal axis A-A thereof by means of at least one front radial bearing 18, one rear radial bearing 22 and one axial bearing 24, which forms an integral part of the shaft 7. The centrifugal compressor 1 comprises a front radial bearing support 26 for carrying the front radial bearing 18, and a rear radial bearing support 28 for carrying the rear radial bearing 22, arranged to be positioned around the shaft 7, respectively at the front and rear of the motor. At the rear, a volute 29 is also provided between the rear radial bearing support 28 and the rear cover 3c. The volute 29 comprises the orifice leading to the tangential fluid outlet 6, after compression. A axial bearing support 30 is also provided to carry the axial bearing 24, arranged to be positioned around the shaft 7, between the first compressor wheel 8 and the front radial bearing support 26. It is clear that the axial bearing could be provided at the rear of the motor.

The bearings are non-contact, aerodynamic type bearings, in order to generate little friction. They require no lubrication and very little maintenance. More particularly, with reference to Fig. 2a, 2b, 3, 4 and 5, the axial bearing 24 is an aerodynamic bearing. According to the present invention, it forms part of the shaft 7 as such, that is to say that it is made at the same time and from the same base material as the shaft 7, so as to form one piece with the shaft 7 in the form of a one-piece unit at the end of production.

This axial bearing is constituted by a disc including, on at least one of the faces thereof, first grooves 24a, preferably spiral-shaped over an annular area at the periphery, arranged to create a film of air. Preferably, the axial bearing 24 comprises preferably spiral-shaped grooves or ribs 24a at the periphery of the disc of the axial bearing 24 on a front face and on a rear face, obtained by a machining process explained below with reference to Fig. 4 and 5. The orientation of the grooves or ribs 24a can be different on the front face to that on the rear face or can be identical. The axial bearing 24 with its grooves or ribs 24a keeps the rotating shaft 7 longitudinally centred by generating films of air from the front face and rear face. The front radial bearing 18 and the rear radial bearing 22 are aerodynamic bearings, and the shaft 7 has, facing the front radial bearing 18 and rear radial bearing 22, second grooves or ribs 32 arranged to create a film of air or gas when the shaft is rotated in the air or gas radial bearings.

In Fig. 2a and 2b, the first centrifugal compressor wheel 8 and the second centrifugal compressor wheel 10 can still be seen mounted back-to-back at each end of the shaft 7. A rotor structure 16 with at least one permanent magnet 16a of an electric motor is mounted or fastened for example on or in a central part of the shaft 7, to drive the shaft rotatably about the longitudinal axis A-A, and an air or gas axial bearing 24 forming part of the shaft 7. A front air or gas radial bearing 18 is mounted on a first end of the shaft 7, and a rear air or gas radial bearing 22 is mounted on a second end of the shaft 7, as shown in Fig. 2a.

As shown in Fig. 3, at the two ends of the shaft 7, there is a first portion of machined ribs or grooves 32 and at the other end a second portion of machined ribs or grooves 32. The rotor structure 16 with at least one permanent magnet 16a is attached to the shaft 7 in a central position for the electric motor.

Fig. 3 shows a three-dimensional view of the shaft 7 with the axial bearing 24 at a first end of the shaft 7. At both ends of the shaft 7, a first portion of ribs or grooves 32 can be seen with the first radial bearing 18 shown in elevation above the ribs or grooves 32, and a second portion of ribs or grooves 32 with the second radial bearing 22 shown in elevation above these ribs or grooves 32. Ribs or grooves 24a are also shown on a face of the disc of the air or gas axial bearing 24 forming part of the shaft 7. Ribs or grooves 24a of a certain depth are produced on an annular area starting from the periphery of the disc and leading towards the centre of the disc. The ribs or grooves 24a and the arrangement thereof are programmed, in particular in the machining unit, to activate the machining tool so as to produce all of the ribs or grooves at once, i.e. by moving the tool holder, or the rotating disc in a single machining direction, for example from the periphery of the disc to the bottom of the annular area of the ribs or grooves. Starting, for example, from the periphery of the disc on one face, groove portions are gradually formed by reciprocating motions of the machining tool in synchronism with the machining unit rotating the disc at a given speed according to a sinusoidal program.

With this program and in combination with the controlled reciprocating motions of the machining tool, each start of all of the grooves 24a is achieved by the rotation of the disc and the reciprocating motions of the machining tool. This is continuously repeated for the following groove or rib portions continuously from the first groove portion to the end or to the bottom of the annular area. With such a way of producing the different ribs or grooves 24a on the disc 24, the machining time per grooved face of the disc is less than one minute, which is significantly different from a previous machining technique using a laser beam.

The machining unit is programmed to have a simultaneous synchronised rotation of the shaft 7 with the machining tool according to a sinusoidal program to obtain a determined arrangement of the ribs or grooves 32 on the first workpiece portion of the shaft 7 for the front air or gas radial bearing 18. Starting, for example, from the start of the first workpiece portion of the shaft 7 on the same side as the first end thereof and in one machining direction only, and as far as the end of the first portion of the first end of the shaft 7, all of the ribs or grooves 32 are machined at once, which significantly reduces the machining time.

It can therefore be determined that the sinusoidal function does indeed achieve synchronisation between the rotation of the shaft 7 and the displacement in a longitudinal direction of the machining tool or of the shaft 7. The frequency and amplitude of the sinusoidal function are chosen as a function of the geometry of the grooves 32, the number of grooves 32, the speed of rotation of the shaft and the speed of the longitudinal displacement.

The specific arrangement of the ribs or grooves 32 produced on the first portion of the first end of the shaft 7 is programmed in the machining unit. In one desired embodiment, the ribs or grooves 32 are each V-shaped, i.e. they include a change of orientation in principle from the middle of the first workpiece portion of the shaft 7. This ensures that the shaft rotating at high speed in the compressor is held without mechanical contact in the air or gas radial bearings. From as low as 6,000 rpm, the air or gas pressure in each aerodynamic radial bearing is such that the shaft is no longer in mechanical contact with the static radial bearing, thus avoiding any mechanical friction.

As a supplement to Fig. 1, the compressor 1 comprises a casing 2, made of aluminium, the top face 2a whereof is closed by a top cover 3a and the front face 2b and rear face 2c whereof are closed by a front cover 3b and a rear cover 3c respectively. The side faces 2d of the casing are joined at their base to form a back 2e with a U-shaped cross-section.

The top cover 3a is positioned on the same side as the electronic components of the compressor. Thus, access to the electronic components integrated in the compressor is easy, which access is provided through the top cover 3a. The front and rear covers 3b, 3c are used to reach the interior of the compressor (motor, rotor, bearings, etc.). A gasket is interposed between the top face of the casing 2 and the top cover 3a. This gasket protects the electronic components from dust and moisture.

The casing 2 has an inlet 5 for the fluid to be compressed provided on the front cover 3b and a tangential outlet 6 for the compressed fluid provided on one of the side faces of the casing 2.

In Fig. 1, the casing 2 comprises an inner housing extending coaxially to the longitudinal axis A-A from end to end between the front face 2b and the rear face 2c of the casing 2 and receiving the front radial bearing support 26 and the front radial bearing 18, the motor and the rotor structure 16 thereof attached to the shaft 7, the rear radial bearing support 28 and the rear radial bearing 22, the second compressor wheel 10 and the volute 29. On the front face 2b side, the inner housing is closed by the front cover 3b which integrates the first compressor wheel 8, the axial bearing support 30 and the axial bearing 24. On the rear face 2c side, the inner housing is closed by the rear cover 3c.

Moreover, at least one orifice is advantageously provided, for example the point given the reference 57a, arranged to allow the fluid to be compressed circulating within the channels to enter the motor and circulate between the stator 14 and the rotor structure 16, and at least one orifice, for example the points given the reference 57b, arranged to allow the fluid to be compressed to exit the motor and rejoin said channels after having cooled the motor.

Similarly, at least one orifice is advantageously provided, for example the points given the reference 59a in Fig. 1, arranged to allow the fluid to be compressed circulating within the channels 54 to circulate in the vicinity of the axial bearing 24, the front radial bearing 18 and the rear radial bearing 22, and at least one orifice corresponding, for example, to the same points given the reference 57b, arranged to allow the fluid to be compressed to rejoin said channels 54 after having cooled said axial bearing 24, front radial bearing 18 and rear radial bearing 22.

Thus, after entering the first compression stage through the inlet 5, the fluid to be compressed passes in the channels 54 through the parts of the compressor located along the longitudinal axis between the first compression stage and the second compression stage to rejoin the second compression stage. As a result, the fluid to be compressed, as it passes between the inner wall 52 and the ferrite elements 14b of the motor, cools the latter and recovers lost heat from the motor to increase the efficiency thereof before entering the second compression stage. Moreover, the orifices 57a, 57b, 59a allow for a slight deviation of the flow so that the fluid to be compressed also circulates between the stator 14 and the rotor structure 16 and in the bearings in order to cool these elements and recover the heat losses from the motor and the heat losses due to friction in the bearings.

The centrifugal compressor 1 allows very high rotational speeds to be reached, lying in the range 100,000 rpm to 500,000 rpm. It allows the fluid compressed in the first compression stage to pass substantially through the entire system to recover any waste heat, and in particular waste heat from the motor, bearings and electronic components, in order to increase the efficiency thereof before entering the second compression stage (as the temperature of the fluid to be compressed increases, so does the pressure thereof). Moreover, the use of the only fluid to be compressed to cool the compressor, without the aid of an additional cooling circuit, as well as the arrangement of the electronic components in the compressor for the electronics to be integrated into the casing, results in a very compact compressor. The compressor according to the invention thus has a high rotational speed and a high compression ratio while occupying a small volume. For example, a compressor according to the invention has a compression ratio greater than 3, and a power of the order of 4 kW for dimensions L × W × H in cm of the order of 14 × 8 × 11 for a weight of only 1.6 kg.

For example, the compressor according to the invention can be used with air or gas to power fuel cells, or any other system that uses compressed air (industrial compressors, medical compressors, ships, etc.).

With a refrigerant gas, the compressor according to the invention can be used in a mobile HVAC (heating, ventilation and air conditioning) system, such as in electric, hybrid or hydrogen-powered vehicles.

The centrifugal compressor can also be used in a stationary system with a refrigerant gas such as a heat pump.

The centrifugal compressor can also be used with a natural gas.

Fig. 4 shows a machining unit 100 for producing ribs or grooves on portions of the first end and of the second end of the shaft 7, as well as for producing ribs or grooves on a first face of the disc of the axial bearing 24 forming part of the shaft 7 or also on a second face of the disc of the axial bearing 24 forming part of the shaft 7.

The machining unit 100 comprises a lathe 130 with two spindles 140 for holding the shaft 7 at both ends of the shaft 7 and for rotating it when machining the ribs or grooves at a determined rotational speed ω. A first spindle 140 is located on a first vertical column or wall 102 of the machining unit 100, whereas the second spindle 140 is located on a second vertical column or wall 103 opposite the first vertical column or wall 102. The two vertical walls 102, 103 of the machining unit 100 are connected by a base 101 in which is arranged a means for guiding at least one tool holder 160 capable of carrying at least one machining tool 120 or two machining tools 120, 121 or a plurality of other different machining tools. The means for guiding the tool holder 160 in the base 101 of the machining unit 100, can be moved in a longitudinal direction A-A on one or two guide rails for example (not shown) in the base 101.

For machining the ribs or grooves on the first front portion or the second rear portion of the shaft 7 placed between the two spindles 140 and driven rotatably about the longitudinal axis A-A, the tool holder 160 can be moved parallel and preferably horizontally to the shaft 7 so as to place the first machining tool 120 in a machining position as already explained above. The first machining tool 120 is oriented perpendicularly to the portion of the shaft 7 so as to be able to machine the ribs or grooves on one of the workpiece portions of the shaft 7. Subsequently, the tool holder 160 is again moved parallel to the shaft 7 towards the second workpiece portion of the shaft.

In this first alternative embodiment of the machining unit 100, a second machining tool 121 can be provided, attached to the same tool holder 160 as the first machining tool 120, or to another tool holder (not shown), but oriented in a direction perpendicular to the direction of the first machining tool. This second machining tool 121 can be used to machine the ribs or grooves on at least one face of the disc of the axial bearing 24 forming part of the shaft 7. To do this, the tool holder 160 is moved parallel to the shaft 7 as far as the disc of the axial bearing 24. Once positioned close to the disc, the second machining tool 121 is driven to machine the ribs or grooves on at least one of the faces of the disc of the axial bearing 24.

It should be noted that for this first alternative embodiment of the machining unit, it is preferable to use the same tool holder for the two machining tools so as to avoid having cantilevered parts that could lead to poor machining precision. With the same tool holder 160, there is no cumulative machining error from two tool holders with non-uniform settings.

In one alternative embodiment, the spindles 140, which hold the shaft 7 rotatably, can be moved in a longitudinal machining direction to produce the ribs or grooves. As already indicated, the shaft 7 is tubular so that it can be attached and moved in a longitudinal direction. With the shaft 7 in tubular form, the two spindles 140 can have their ends partially inserted into the inner tube of the shaft at both ends of the shaft to hold it locked and rotate it at a set rotational speed ω for machining. It goes without saying that the two spindles 140 with the shaft 7 to be machined can move in a longitudinal direction during the machining operation.

In this alternative embodiment, the machining unit 100 further comprises at least one tool holder 160, which is connected to the structure of the lathe 130. It goes without saying that the actual dimensions of the machining unit 100 are presented smaller than they would be in reality. The tool holder 160 carries a first machining tool 120 whose machining head can come into contact with the shaft 7 to machine the grooves or ribs and can be moved back and forth according to how the machining unit 100 is programmed. At least the end of the head of the machining tool 120 can be made of diamond for machining the ribs or grooves on the shaft 7 made of tungsten carbide or ceramic. This is carried out so as to have a simultaneous synchronised rotation of the shaft 7 with the first machining tool 120 according to a sinusoidal program to obtain a determined arrangement of the ribs or grooves on the workpiece portions of the shaft 7 for each front or rear air or gas radial bearing.

In an alternative embodiment, the tool holder 160 with the first machining tool 120 can also be jointly moved in a longitudinal machining direction instead of the shaft 7 for machining the ribs or grooves on the shaft.

The frequency of the reciprocating motions of the first machining tool 120 can also be changed according to how the machining unit 100 is programmed. In particular, the reciprocating motions of the machining tool are synchronised by sinusoidal programming carried out in the machining unit, as well as to the desired and programmed arrangement of the ribs or grooves to be produced on the portion of the shaft 7 and/or of the disc of the axial bearing 24 of the shaft 7.

It should be noted that the axial bearing 24 of the shaft 7 is made from the same material as the shaft 7 in one piece. The shaft 7 and the axial bearing 24 of the shaft can thus be produced at the same time either by a moulding operation depending on the material used, or preferably by using at least one machining tool of a tool holder of the machining unit 100, which is subsequently used for machining the grooves or ribs on the front and rear portions of the shaft 7. In this case, it is possible to use the first machining tool 120 of the tool holder 160. Moreover, to produce the axial bearing 24 on an initial blank of the shaft 7, this initial blank of the shaft 7, which can already be in tubular form, can initially have a diameter corresponding substantially to the final external diameter of the axial bearing 24 to be produced. The blank is attached to the two spindles 140 of the machining unit 100 so that it can be rotated about a longitudinal axis. The first machining tool 120, which must be of a more abrasive material, harder than the material of the blank of the shaft 7, is moved from a first end of the rotating shaft to a first position of the shaft 7 corresponding to the position of a face of the disc of the axial bearing 24 to be produced. This first machining operation involves the blank of the rotating shaft, as well as the machining tool 120 so as to be able to remove a first thin layer of material from the blank of the shaft. Subsequently, a plurality of other successive thin layers are removed from the rotating shaft by the machining tool 120 by longitudinal displacement of the first end to the first position of the axial bearing 24 until the desired shaft diameter is reached, and thus the axial bearing 24 is produced on the shaft 7. If a continuation of the shaft starts from a second position of the axial bearing at the opposite end of the shaft, machining by removing thin layers must also be carried out on the other side of the blank of the shaft by changing the direction of the tubular blank to attach the blank of the shaft to the two spindles 140 in an opposite direction and repeat the operations with the machining tool 120 on its tool holder 160 as before. This makes it easier to change the direction of the shaft blank between the spindles 140, rather than having to move the tool holder 160 with the machining tool 120 from another location on the machining unit 100.

It goes without saying that once the shaft 7 has been produced to the desired diameter and the axial bearing 24 has been produced, the ribs or grooves can be machined on the front and rear portions of the shaft by the first machining tool 120 connected to the tool holder 160.

Typically, the shaft 7 to be machined is made of tungsten carbide or ceramic. The machining tool 120 thus typically comprises a diamond machining head. This makes it possible to produce all of the ribs or grooves at once on a first workpiece portion of the first end of the shaft 7 from the beginning of the first portion to the end of the first portion by the reciprocating motions of the machining tool 120 and displacement in a longitudinal direction of machining of the rotating shaft 7 according to how the machining unit 100 is programmed or also by longitudinal displacement of the first tool holder 160, or of the first tool 120 in the tool holder 160.

In this first embodiment of the machining unit 100, a second machining tool 121 mounted on the tool holder 160 in a direction perpendicular to the first machining tool 120 must be provided to produce the ribs or grooves on one face of the disc of the axial bearing 24, or on two faces of the disc by changing the direction of the shaft 7 attached between the two spindles 140.

It should also be noted that the ribs or grooves can be machined successively on a first front portion and a second rear portion of the shaft by the first machining tool 120. The orientation of the ribs or grooves can be changed when half of the first workpiece portion and half of the second workpiece portion of the shaft 7 are passed, according to how the machining unit is programmed, so as to obtain V-shaped grooves over the length of the first and second machined portions with the aim of generating air or gas pressure in a front radial bearing arranged on the first portion or in a rear radial bearing arranged on the second portion when the compressor is operating with the shaft 7 rotating above a limit speed so that there is no longer any mechanical contact with the one or more front and rear radial bearings.

For machining the axial bearing 24, which is in the form of a disc, only the second machining tool 121 is used, which can be mounted on the tool holder 160 capable of being longitudinally displaced along the axis A-A. The ribs or grooves and their arrangement are programmed in the machining unit 100 to activate the second machining tool 121 in order to produce all of the ribs or grooves at once on a first face of the disc by moving the machining tool, or the disc rotated in a single machining direction from the periphery of the disc to the bottom of the annular zone of the ribs or grooves or vice versa, and by reciprocating motions of the machining tool 121 according to how the machining unit 100 is programmed. The two faces of the disc of the axial bearing 24 can be machined by the second machining tool by inversing the direction of the shaft 7 between the two spindles 140.

On one or two faces of the disc of the axial bearing 24, the ribs or grooves can be made in the form of a spiral in the same orientation on two faces or in two different orientations with the aim of generating films of air via the grooves when the shaft 7 rotates to keep the axis in a well-centred position longitudinally during operation of the centrifugal compressor.

It should also be noted that both the first machining tool 120 and the second machining tool 121 can be moved in the tool holder 160 in a first direction or in a second, opposite direction to come into contact with or move away from a workpiece portion of the shaft 7 for the first machining tool 120, as shown symbolically by the arrows in the tool holder 160 or in each of the machining tools 120, 121.

Fig. 5 is partly taken from Fig. 4 of the machining unit 100. However, in this figure, there is only one tool holder 160 and also only one machining tool 120 which can be oriented or moved rotatably about an axis 150 of the tool holder 160 so as to be in an indicated position (1) for machining the ribs or grooves on the front and rear portions of the shaft 7, and in an indicated position (2) for machining the ribs or grooves on one face or preferably two faces of the disc of the axial bearing 24.

As with the tool holder 160 shown in Fig. 4, this tool holder 160 can be moved longitudinally, for example on one or more guide rails arranged in the base 101 of the machining unit 100.

This second embodiment of the machining unit 100 appears to be easier to use than the first embodiment shown above in Fig. 4, but is not necessarily faster for obtaining the ribs or grooves on the portions of the shaft 7 and on the disc of the axial bearing 24. All of the elements shown in this Fig. 5, which are identical to the elements described with reference to Fig. 4, are thus not repeated. The tool holder 160 can be equipped with more than two machining tools, but with only one machining tool in operation for machining the ribs or grooves on one or two portions of the shaft 7 or on one face or two faces of the disc of the axial bearing 24.

It goes without saying that the present invention is not limited to the examples shown and that various alternatives and modifications that may be clearly apparent to a person skilled in the art can be made thereto. Other combinations are of course possible with what is already known with centrifugal compressors. Fast and precise machining of ribs or grooves can be carried out on other workpieces than those described hereinabove with equivalent machining elements.

## Claims

1. Method for machining ribs or grooves on a shaft (7) intended to be rotated about a longitudinal axis (A-A) of a centrifugal compressor (1), and/or on an air or gas axial bearing (24) forming part of the shaft (7), a rotor structure (16) with at least one permanent magnet (16a) of an electric motor being intended to be mounted on the shaft (7) or in the shaft (7) in order to drive the shaft rotatably, the centrifugal compressor (1) further comprising a casing (2) having a fluid inlet (5) and a compressed fluid outlet (6), a first compressor wheel (8) and a second compressor wheel (10) intended to be mounted at two ends of the shaft (7) in the casing (2), a front air or gas radial bearing (18) intended to be mounted on a first end of the shaft (7), and/or a rear air or gas radial bearing (22) intended to be mounted on a second end of the shaft (7), the machining method being carried out in a machining unit (100) adapted to receive the shaft (7) with the axial bearing (24) to be machined and comprising a tool holder (160) with a machining tool (120, 121) for machining the ribs or grooves on at least one portion of the shaft (7) or of the axial bearing (24) of the shaft (7),
the method being **characterised in that** all of the ribs or grooves (24a; 32) are obtained on a workpiece portion of the shaft driven rotatably and/or of the disc of the axial bearing (24) of the shaft (7), by displacement of the shaft (7) and/or of the disc of the axial bearing (24) of the shaft (7), or of the tool holder (160) at once, in a longitudinal machining direction, by the machining tool (120, 121) performing reciprocating motions with a machining position in contact with the shaft (7) and/or with the disc of the axial bearing (24) of the shaft (7), and a position without contact with the shaft (7) and/or with the disc of the axial bearing (24) of the shaft (7), from the beginning to the end of the workpiece portion with the shaft (7) and/or with the disc of the axial bearing (24) of the shaft (7), and **in that** the reciprocating motions of the machining tool (120, 121) are synchronised with a sinusoidal program carried out in the machining unit (100), as well as with the desired and programmed arrangement of the ribs or grooves to be produced on the portion of the shaft (7) and/or of the disc of the axial bearing (24) of the shaft (7).

2. Machining method according to claim 1, wherein the air or gas axial bearing (24) is produced on the shaft (7) before machining the ribs or grooves (32) on the shaft (7).

3. Machining method according to claim 2, **characterised in that** the air or gas axial bearing (24) is produced by taking a blank of a shaft (7) of a diameter substantially equal to the desired diameter of the axial bearing (24) to be produced, **in that** the blank of the shaft (7) is rotated in the machining unit (100) about a longitudinal axis (A-A), **in that** an abrasive material machining tool (120) is moved from one end of the shaft (7) rotatably to a first position of the shaft (7) corresponding to the position of a face of the disc of the axial bearing (24) to be produced so as to remove a thin layer of material from the shaft (7), and **in that** a plurality of successive thin layers are removed from the rotating shaft (7) by the machining tool (120) by longitudinal displacement of the first end to the first position of the axial bearing (24) until the desired diameter of the shaft (7) is reached.

4. Machining method according to claim 3, **characterised in that** the same successive machining operation for the removal of thin layers is carried out from the opposite end of the shaft (7) to a second position of the axial bearing corresponding to the second face of the axial bearing (24).

5. Machining method according to claim 1, wherein the shaft (7) to be machined is made of tungsten carbide or ceramic, and wherein the head of the machining tool (120) is made of diamond, **characterised in that** the shaft (7) is rotated during machining about the longitudinal axis (A-A), **in that** all of the ribs or grooves (32) are obtained at once on a first workpiece portion of the first end of the shaft (7) from the beginning of the first portion to the end of the first portion by reciprocating motions of the machining tool (120) and displacement in a longitudinal direction of machining of the rotating shaft (7) according to how the machining unit (100) is programmed.

6. Machining method according to claim 1, wherein the shaft (7) to be machined is made of tungsten carbide or ceramic, and wherein the head of the machining tool (120) is made of diamond, **characterised in that** the shaft (7) is rotated during machining about the longitudinal axis (A-A), **in that** all of the ribs or grooves (32) are obtained at once on a second workpiece portion of the second end of the shaft (7) from the beginning of the second portion to the end of the second portion by reciprocating motions of the machining tool (120) and displacement in a longitudinal direction of machining of the tool holder (160) according to how the machining unit (100) is programmed.

7. Machining method according to one of claims 5 and 6, **characterised in that** during machining of the ribs or grooves (32), a change of orientation of the ribs or grooves (32) occurs when half of the first workpiece portion of the first end of the shaft (7) and when half of the second workpiece portion of the second end of the shaft (7) are passed, according to a programming of the machining unit so as to obtain V-shaped grooves along the length of the first and second machined portions for the purpose of generating air or gas pressure in a front radial bearing (18) arranged on the first portion or in a rear radial bearing (22) arranged on the second portion during operation of the compressor with rotation of the shaft (7) above a limit speed so that there is no longer any mechanical contact with the one or more front (18) and rear (22) radial bearings.

8. Machining method according to claim 1, wherein the workpiece is the air or gas axial bearing (24) in the form of a disc forming part of the shaft (7) in one piece, **characterised in that** the ribs or grooves (24a) and the arrangement thereof are programmed in the machining unit (100) to activate the machining tool (120, 121) so as to produce all of the ribs or grooves at once on a first face of the disc by moving the machining tool, or the rotating disc in a single machining direction from the periphery of the disc to the bottom of the annular area of the ribs or grooves or conversely, and by the reciprocating motions of the machining tool (120, 121) according to how the machining unit (100) was programmed.

9. Machining method according to claim 8, **characterised in that** all of the ribs or grooves (24a) are produced at once on a second face of the disc by moving the machining tool, or the rotating disc in a single machining direction from the periphery of the disc to the bottom of the annular area of the ribs or grooves (24a) or conversely, and by the reciprocating motions of the machining tool (120, 121) according to how the machining unit (100) was programmed.

10. Machining method according to claim 9, **characterised in that** all of the ribs or grooves (24a) are produced in the form of spirals with the same orientation on the two faces or with two different orientations so as to generate films of air via the grooves when rotating the shaft (7) to hold the axis in a position that is longitudinally well centred during operation of the centrifugal compressor (1).
